(19) Europäisches Patentamt
European Patent Office
Office européen des brevets

(11) Publication number: **0 363 139 B1**

(12) **EUROPEAN PATENT SPECIFICATION**

(45) Date of publication of patent specification: **07.12.94**

(51) Int. Cl.$^5$: **C09D 11/00**

(21) Application number: **89310081.8**

(22) Date of filing: **03.10.89**

# (54) A recording ink for an ink jet printer.

(30) Priority: **03.10.88 JP 249211/88**
**03.10.88 JP 249212/88**

(43) Date of publication of application:
**11.04.90 Bulletin 90/15**

(45) Publication of the grant of the patent:
**07.12.94 Bulletin 94/49**

(84) Designated Contracting States:
**DE FR GB**

(56) References cited:

**DATABASE WPI, accession no. 79-78388B, Derwent Publications Ltd, London, GB;& JP-A-54 120 007 (NIPPON SHINBUN) 10-09-1979**

**DATABASE WPIL, Nr. 86-098110, Derwent Publications Ltd, London, GB;& JP-A-61 043 673 (RICOH K.K.) 03-03-1986**

(73) Proprietor: **SEIKO EPSON CORPORATION**
**4-1, Nishishinjuku 2-chome**
**Shinjuku-ku Tokyo (JP)**

(72) Inventor: **Owatari, Akio**
**c/o SEIKO EPSON CORP.**
**3-5 Owa 3-chome**
**Suwa-shi Nagano-ken (JP)**

(74) Representative: **Miller, Joseph et al**
**J. MILLER & CO.**
**34 Bedford Row,**
**Holborn**
**London WC1R 4JH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 363 139 B1

## Description

This invention relates to recording inks for ink jet printers, for example, of the type where a recording ink is compressed by taking advantage of vibration generated either by an electro-mechanical transducing element or an electro-thermal transducing element, and an ink particle is then ejected from a nozzle onto a recording medium.

Ink jet printers have many advantages such as freedom from noise and attainment of high speed printing, high quality printing and colour printing. However, in an ink jet printer liquid recording ink is compressed during a printing operation, and so the presence of bubbles or bubble nuclei at a pressure generating part of the ink jet printer makes it impossible to apply a sufficient pressure to the recording ink because of absorption of the generated pressure by the bubbles. In the worst case, this makes it impossible to eject an ink particle from a nozzle of the ink jet printer. For this reason, recording inks for ink jet printers have to be de-aerated or subjected to fine filtration during manufacture to remove bubble nuclei before being put into a vessel, e.g. an ink bag, having low air permeability. Although the above treatment is initially effective, the effect is lost with the passage of time. In particular, when the vessel containing the recording ink is placed in a relatively high temperature environment, the recording ink itself evolves gas so that bubbles are formed even though the recording ink was de-aerated during manufacture. Such bubbles result in the omission of dots to be produced during a printing operation, so that print quality deteriorates.

For the above reasons, conventional recording inks for ink jet printers have limitations on transportation, storage, use, e.g. limited storage temperature and a short storage life.

The present invention seeks to provide a recording ink for an ink jet printer having high printing stability which does not evolve any gas which will form bubbles during transportation and storage even when placed in a relatively high temperature environment and, therefore, in use produce high quality print.

According to the present invention, there is provided a recording ink for an ink jet printer characterised by having a nitrite ion concentration of 0.2 to 10 ppm.

Preferably the recording ink contains a dye having at least one azo linkage in its molecule.

The invention is illustrated, merely by way of example, in the accompanying drawings, in which:-

Figure 1 is a schematic outline of an ink passage of an ink jet printer; and

Figure 2 is a graph showing change with time of dissolved nitrogen concentration in a recording ink and in water at 70 °C.

As shown in Figure 1, an ink passage of an ink jet printer basically comprises an ink tank 12 for holding a recording ink 11, an ink feed pipe 13 for transferring the ink 11 to a printing head 14, and a filter 15 for removing foreign matter and bubble nuclei. The bubbles formed in the ink passage will flow with the recording ink and make it impossible to eject the recording ink from the nozzles of the printing head when the bubbles reach a pressure generating part thereof.

In general, cavitation occurs in the recording ink, accompanying the generation of pressure, and this sometimes causes dissolved gas in the recording ink to form bubbles. For this reason, as is disclosed in Japanese Laid Open Patent No. 74406/1977, an attempt has been made to add a sulphite to a recording ink for an ink jet printer for the purpose of lowering the concentration of gas by reducing the oxygen dissolved therein. this expedient is, however, ineffective in the case of nitrogen dissolved in the recording ink. Even when a recording ink has, during manufacture, been completely freed of dissolved nitrogen and then hermetically sealed in a vessel having a low coefficient of gas permeability, the nitrogen concentration of the ink increases with time as shown in Figure 2.

In Figure 2, curve (a) represents increase in nitrogen in the case where pure water is hermetically sealed in an aluminium laminate bag, and curve (b) represents increase in nitrogen in the case where 3% aqueous solution of a dye having three azo linkages, i.e. Direct Black 154, is hermetically sealed as a recording ink in the same bag. The amount of dissolved nitrogen was measured by gas chromatography (with a column packed with Molecular Sieve 5A manufactured by Gasukuro Kogyo Inc.). For the above reason, even when recording ink is sealed in a bag having an excellent low coefficient of gas permeability after de-aeration or an oxygen reducer is added to the recording ink, the formation of bubbles in the recording ink cannot be prevented unless the generation of nitrogen from the recording ink itself is prevented. In Figure 2, the amount of nitrogen dissolved in the recording ink shown in curve (b) reaches saturation at a value of about 14 ppm, and the presence of bubbles in the recording ink has ben actually confirmed when the amount of dissolved nitrogen exceeded this value.

The present inventor has conducted analyses and experiments based on the recognition that impurities contained in a recording ink is the cause of the nitrogen generation and, as a result, has found that the presence of a nitrite ion and a dye (particularly one having no azo linkage) in the recording ink is causative of nitrogen generation in the recording ink itself. Further, the present inventor has found that even when the recording ink contains a dye having an azo linkage, the adjustment of the nitrite ion concentration of the recording ink to 10 ppm or less enables the complete elimination of the formation of bubbles in the recording ink even when left to stand at a temperature of 70 °C for fifteen days, so that the recording ink can satisfy the severest possible service conditions.

When the nitrite ion concentration is below 0.2 ppm, the ink particles of the recording ink tend to describe a curve in their flight from a nozzle of the ink jet printer to a recording medium after the ink jet printer has been out of use for a long period of time. Therefore, the nitrite ion concentration of the recording ink should be 0.2 to 10 ppm. Further, in the case of a dye not containing any azo linkage, the curved flight phenomenon is observed irrespective of the nitrite ion concentration after the printer has been out of use for a long period of time. Therefore, it is preferable that a recording ink according to the present invention uses a dye with an azo linkage in its molecule and a nitrite concentration of 0.2 to 10 ppm.

The nitrite ion concentration of a recording ink according to the present invention can be adjusted to 0.2 to 10 ppm by making use of a know sulphamic acid neutralisation method for removing nitrite ions. With this method, however, it is difficult to control the nitrite ion concentration to be in the range of 0.2 to 10 ppm, and sulphate groups may remain in the recording ink. In one method of easily controlling the nitrite ion concentration the recording ink is passed through an ion exchange resin to remove nitrous acid through adsorption. In another method recording ink is passed through an ultra-filtration membrane to separate and remove the nitrite ions. Thus, the aim of the present invention can be attained by adjusting the nitrite ion concentration to 0.2 to 10 ppm, de-aerating the recording ink, and sealing the recording ink in a bag or a vessel having a low gas permeability.

A recording ink according to the present invention may be mainly composed of a dye as a colourant, a wetting agent for preventing clogging of nozzles of the ink jet printer and water as a solvent. In order to adjust the nitrite ion concentration in the recording ink to 0.2 to 10 ppm, it is preferred that a salt of nitrous acid is contained in low concentration in the components of the recording ink.

In particular, in the synthesis of a dye having azo linkage used in a recording ink according to the present invention, sodium nitrite is used when an aromatic amine is diazotised, but then it is necessary to lower the sodium nitrite concentration during the synthesis of the dye.

The dyes used in a recording ink according to the present invention may be direct dyes, acidic dyes, and basic dyes listed in the Colour Index published by The Society of Dyers and Colourists. In particular, is is preferred to use a dye having at least one azo linkage in its molecule and of high water solubility, and a wetting agent. When the proportion of the dye in the recording ink is high, the nitrite ion concentration of the recording ink can also be easily increased. Therefore, in this case, the nitrite ions should first be removed by passing an aqueous dye solution through an ion exchange resin. Addition of a dye in an amount of 0.5 to 10 parts by weight is optimal for the purpose of attaining a sufficient print density.

Dyes Nos. 1 to 23 listed in Table 1 are examples of dyes that can be used in a recording ink according to the present invention.

TABLE 1

No. 1 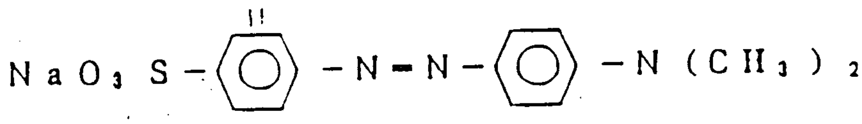

No. 2 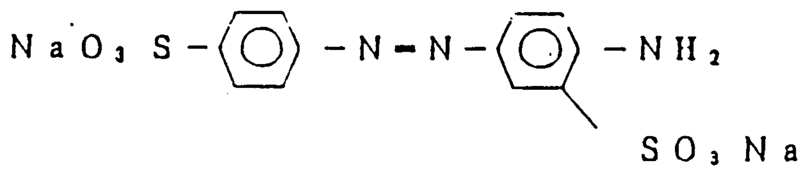

No. 3 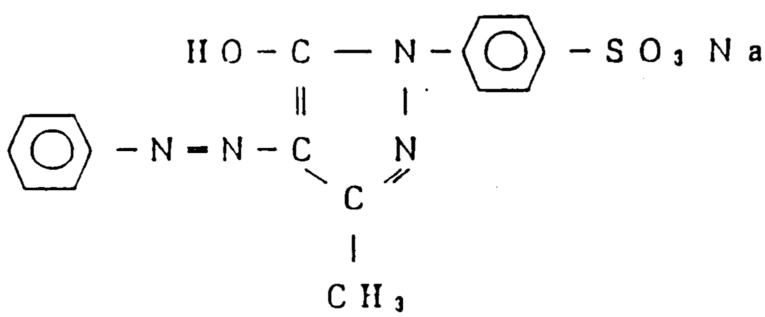

No. 4

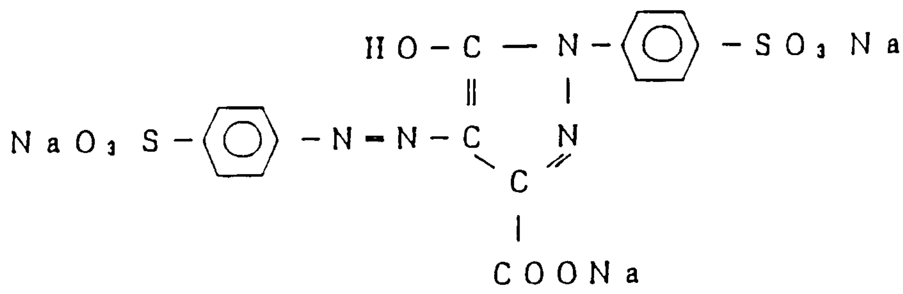

No. 5

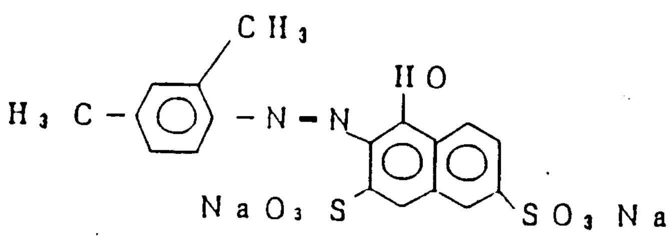

No. 6

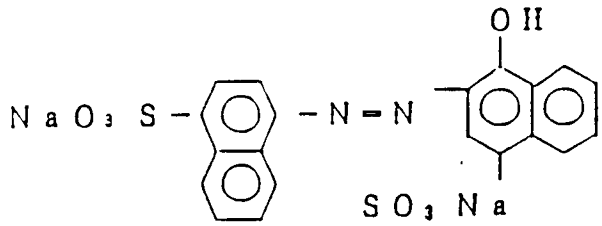

No. 7

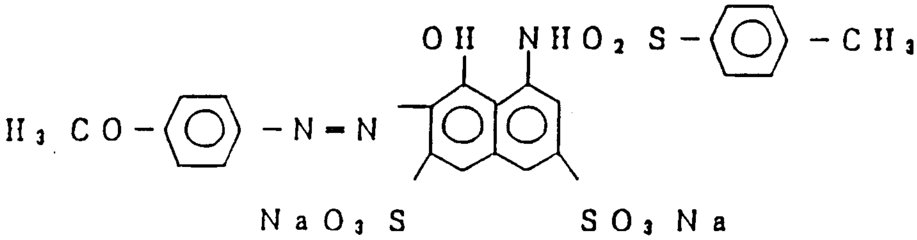

No. 8

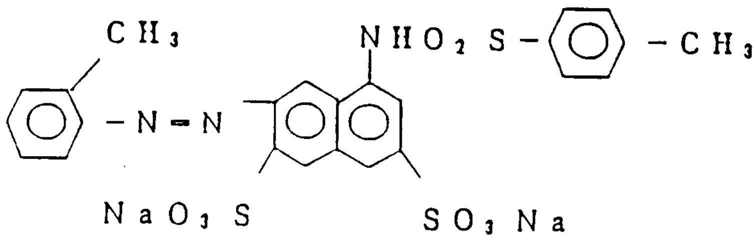

No. 9

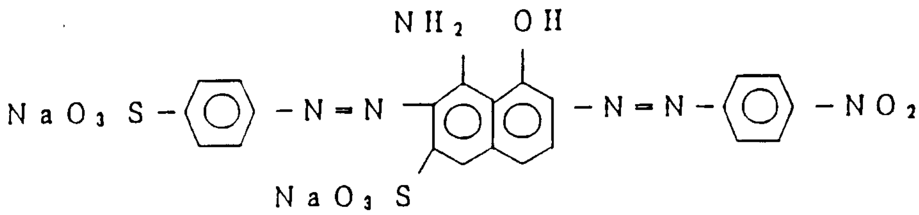

No. 10

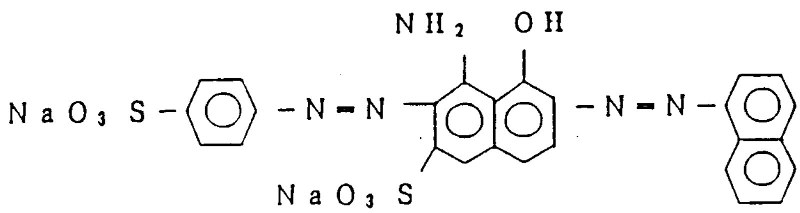

No. 11

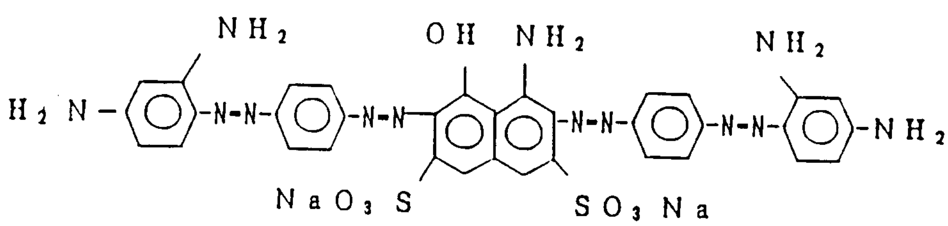

No. 12

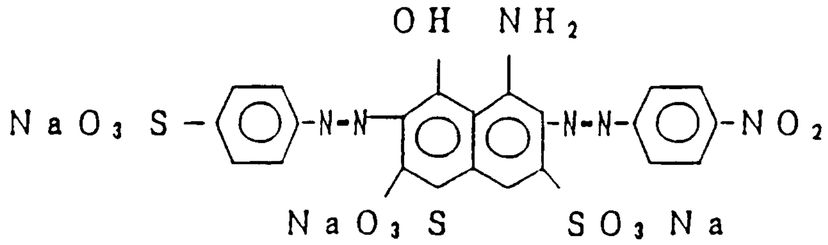

No. 13

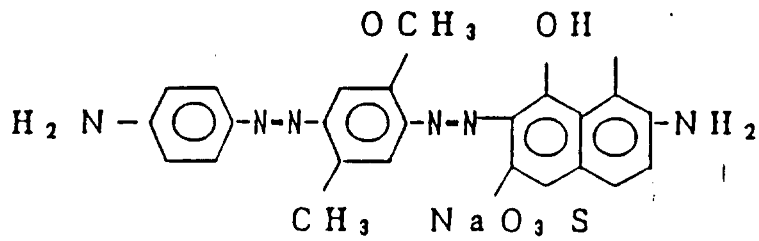

No. 14

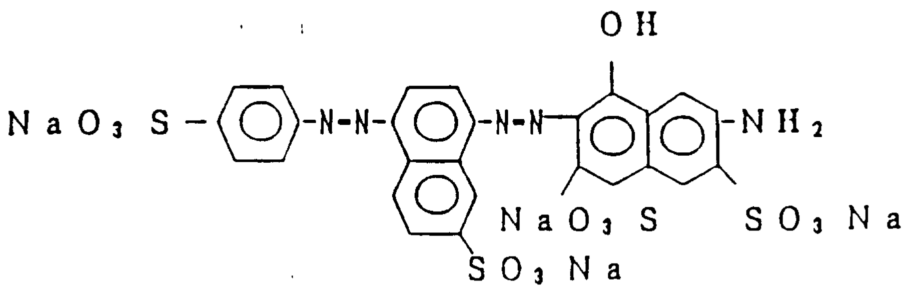

No. 15

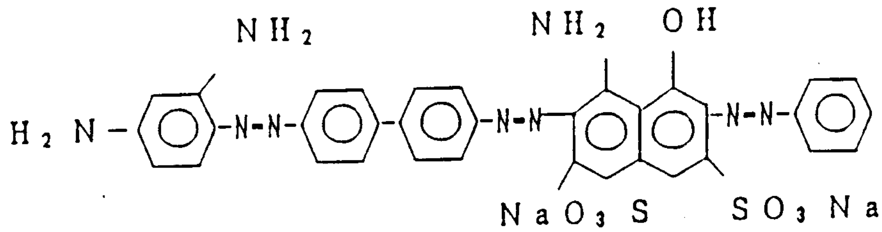

No. 16

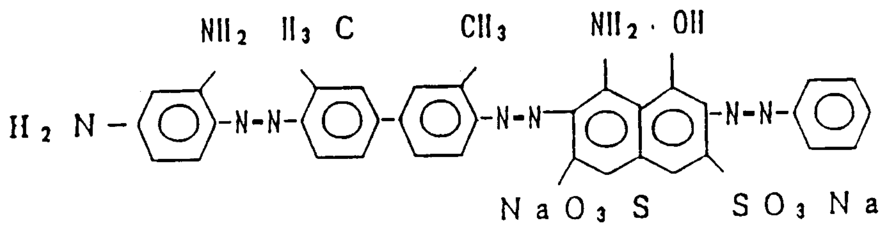

No. 17

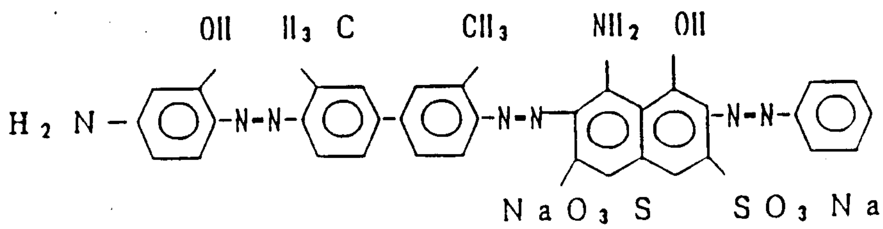

No. 18

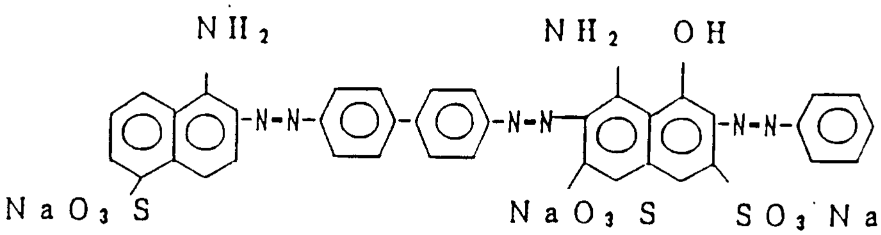

No. 19

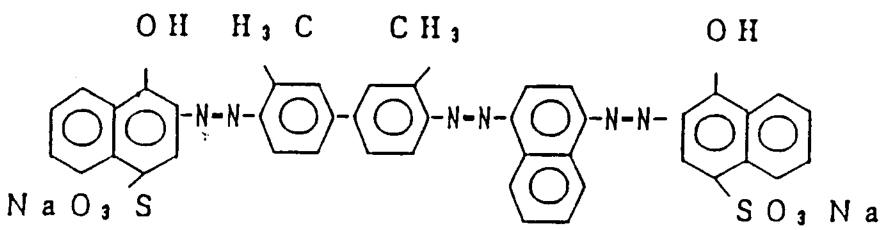

No. 20

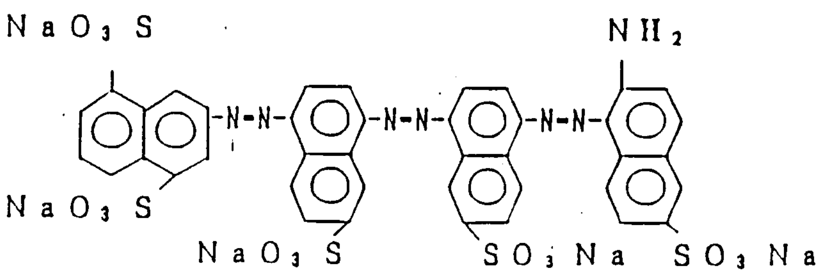

No. 21

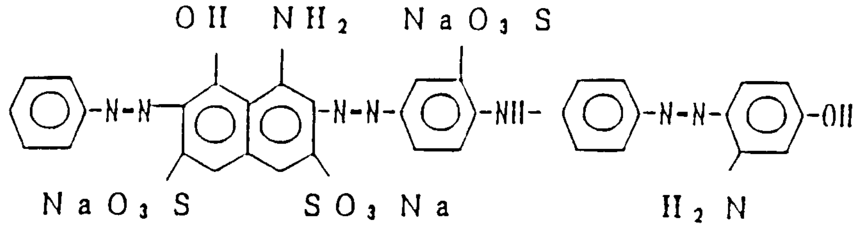

No. 22

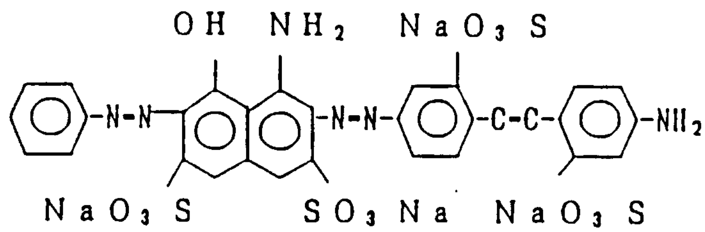

No. 23

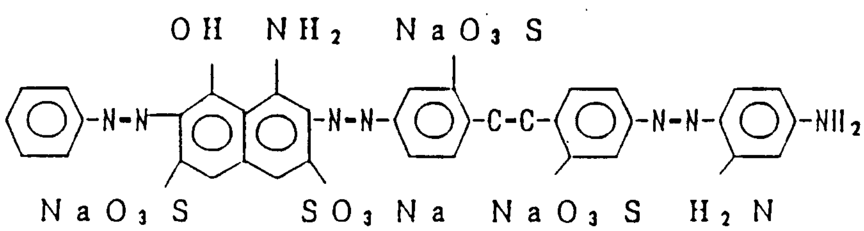

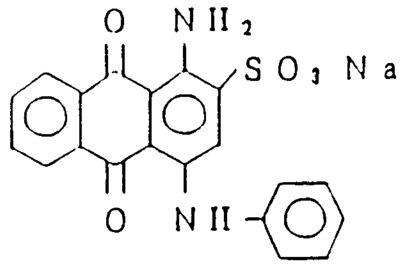

No. 24

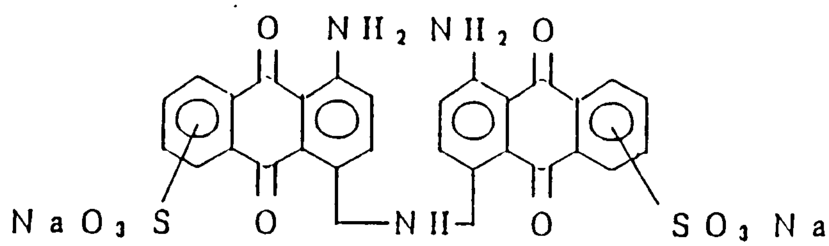

No. 25

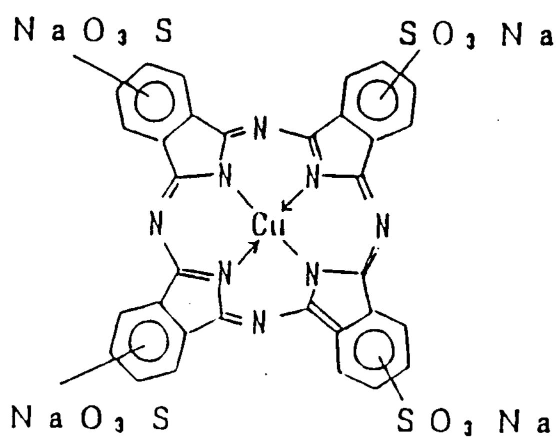

No. 26

A wetting agent is an important component for preventing a recording ink from drying at nozzles of an ink jet printer. In a recording ink according to the present invention, it is possible to use water soluble organic solvents. Among them, polyhydric alcohols, ether and ester derivatives of polyhydric alcohols, water soluble amines, and cyclic nitrogenous compounds are suitable. Since these compounds are substantially free from any salt of nitrous acid, no particular treatment is necessary for the removal of nitrate ions. Specific examples of polyhydric alcohols are ethylene glycol, diethylene glycol, triethylene glycol, propylene glycol, polyethylene glycol and glycerin. Specific examples of ether derivatives of polyhydric alcohols are ethylene glycol monomethyl ether, ethylene glycol monoethyl ether, diethylene glycol monoethyl ether, diethylene glycol monobutyl ether, diethylene glycol dimethyl ether, diethylene glycol methyl ethyl ether and triethylene glycol monomethyl ether. Specific examples of ester derivatives of polyhydric alcohols are ethylene glycol monomethyl ether acetate, diethylene glycol monoethyl ether acetate, glycerin monoacetate and glycerin diacetate. Examples of water soluble amines are mono-, di- and tri-ethanolamines and polyoxyethyleneamine. A specific example of a cyclic nitrogenous compound is N-methyl-2-pyrrolidone. The larger the amount of these wetting agents included in a recording ink, the better the prevention of drying. However, the viscosity of the recording ink is also increased. Therefore, too great an addition of wetting agent is unfavourable.

In general, the viscosity of a recording ink has a great effect on the ejection cycle of ink particles, and an increase in the viscosity makes it impossible to increase the ejection cycle and makes the ejection characteristics unstable. For this reason, the recording ink viscosity is preferably 50 mPa.s or less. When this viscosity range is taken into consideration, it is preferable to add a wetting agent in an amount of 5 to 80 parts by weight.

Further, in order to promote the penetration of a recording ink according to the present invention into recording paper, the pH value of the ink may be adjusted to 12 to 14 as proposed in Japanese Laid Open Patent No. 57862/1981.

Further, if necessary, additives such as preservatives, fungicides, chelating agent, and pH adjustors may be added to the recording ink. However, care should be taken when these additives are used because some of them comprise a salt of nitrous acid.

The present invention will be further described with reference to the following Examples.

## EXAMPLE 1

| Composition | |
|---|---|
| dye: C.I. Direct Black 154 (commercially available) (dye No. 16 of Table 1)<br>glycerin<br>ultra-pure water | 3 parts by weight<br>15 parts by weight<br>82 parts by weight |

A recording ink having the above described composition was heated with stirring to prepare 500 g of the recording ink. This recording ink was cooled and passed through an anion exchange resin (Amberlite IRA-410; a product of Japan Organo Co. Ltd.) and then ion-chromatographed to confirm that the nitrite ion concentration was 5 ppm. Thereafter, the recording ink was filtered through a 1 micron membrane filter and de-aerated, and an aluminium-laminated polyethylene bag having low gas permeability was filled with the treated recording ink. The polyethylene bag was subjected to submerged sealing to obtain an ink bag containing the recording ink hermetically sealed therein. The volume of one ink bag was 122 cc. Four ink bags were placed in an environment of 70 °C for fifteen days. Then, the nitrogen concentration was measured by gas chromatography and found to be, on average, 8 ppm.

The recording ink was used for printing with an ink jet printer HG-2550 (a product of Seiko Epson Corporation). As a result, stable printing was possible and all required dots were formed with all four ink bags. A printing head of the ink jet printer was filled with this recording ink and allowed to stand at room temperature for one month without a cap (normally provided for prevention of clogging), and the recording ink was delivered again. It was found that printing was possible in good conditions without clogging.

## COMPARATIVE EXAMPLE 1

When a recording ink having a composition described in Example 1 was not passed through an anion exchange resin, the nitrite ion concentration was 24 ppm. In the same manner as that of Example 1, this recording ink was filtered and de-aerated, hermetically sealed in aluminium-laminated bags placed in an environment of 70 °C for fifteen days, and then subjected to measurement of nitrogen concentration. The average nitrogen concentration was 14 ppm. One ink bag was opened under water and it was found that bubbles had been formed. Further, printing was conducted with the remaining bags in the same manner as that of Example 1. It was found that all three ink bags frequently brought about omission of dots, so that no stable printing was attained.

EXAMPLE 2

| Composition | |
|---|---|
| dye: C. I. Direct Black 168 (commercially available) | 2 parts by weight |
| polyethylene glycol No.200 | 10 parts by weight |
| triethylene glycol | 5 parts by weight |
| ultra-pure water | 83 parts by weight |

A recording ink having the above described composition was prepared in the same manner as that of Example 1 and passed through an ultra-filtration membrane (HF1-43-PM1; a product of Romicon), and ultra-pure water was added to compensate for the loss due to concentration by ultra-filtration. Thereafter it was confirmed that the nitrite ion concentration of the recording ink was 2 ppm. This recording ink was filtered and de-aerated and then hermetically sealed in an ink bag, and evaluation was conducted in the same manner as that of Example 1. As a result, it was found that the amount of nitrogen generated was 5 ppm. Further, printing stability was excellent, and no clogging occurred even after one month.

COMPARATIVE EXAMPLE 2

After a recording ink described in Example 2 was prepared, 0.1 g of sulphamic acid was added thereto. The recording ink was further heated with stirring, cooled and subjected to measurement of the nitrite ion concentration. As a result, it was found that the concentration was 0.1 ppm. This recording ink was filtered and de-aerated and then hermetically sealed in an ink bag, and evaluation was conducted in the same manner as that of Example 1. As a result, it was found that the amount of nitrogen generated was 1.5 ppm. Further, printing could be stably conducted without any omission of dots. However, in the evaluation of clogging after the recording ink had been allowed to stand at room temperature for one month, the print quality was poor because re-delivery of the recording ink was unstable and the ink particles described a curved flight although clogging was incomplete.

EXAMPLE 3

Recording inks 3-1 to 3-5 as examples of the present invention were adjusted so as to have a nitrite ion concentration of 0.2 to 10 ppm by conducting the same treatment as that of Example 1 or Example 2. For comparison, recording inks 3-6 to 3-8 were used as such without conducting any adjustment. Recording inks 3-9 and 3-10 were subjected to neutralisation of the nitrite ions with sulphamic acid.

In the Table below, amounts of the components are parts by weight, and the concentration is that of the nitrite ion.

| Recording ink | Component | Amount | Concentration |
| --- | --- | --- | --- |
| 3-1 | C.I.Direct Black 154 | 2 | 10 ppm |
| | glycerin | 15 | |
| | diethylene glycol | 5 | |
| | ultra-pure water | 78 | |
| 3-2 | C.I.Direct Black 86 | 3 | 4 ppm |
| | triethylene glycol | 28 | |
| | EDTA-disodium (chelating agent) | 0.01 | |
| | ultra-pure water | 71 | |

| | | | |
|---|---|---|---|
| 3-3 | C. I. Food Black 2<br>polyethylene glycol No.400<br>ethylene glycol mono-methyl ether<br>Proxel XL-2 (fungicide; a product of ICI)<br>ultra-pure water | 2.5<br>12<br>3<br>0.2<br>82.3 | 6 ppm |
| 3-4 | C.I.Direct Red 39<br>triethanolamine<br>sodium dehydroacetate (fungicide)<br>ultra-pure water | 2<br>15<br>0.1<br>82.9 | 0.9 ppm |
| 3-5 | C.I. Acid Red 254<br>glycerin<br>N-methyl-2-pyrrolidone<br>potassium hydroxide<br>ultra-pure water | 1.5<br>20<br>4<br>1<br>81.5 | 0.3 ppm |
| 3-6 | C.I.Direct Black 154<br>glycerin<br>diethylene glycol<br>ultra-pure water | 2<br>15<br>5<br>78 | 34 ppm |
| 3-7 | C. I. Food Black 2<br>polyethylene glycol No.400<br>Proxel XL-2<br>ultra-pure water | 2.5<br>10<br>0.2<br>87.3 | 18 ppm |

| | | | |
|---|---|---|---|
| 3-8 | C. I. Acid Red 254<br>N-methyl-2-pyrrolidone<br>EDTA-disodium<br>ultra-pure water | 1.5<br>30<br>0.2<br>68.3 | 11 ppm |
| 3-9 | C. I. Acid Yellow 23<br>monoethanolamine<br>triethanolamine<br>ultra-pure water | 1<br>5<br>5<br>89 | 0.02 ppm |
| 3-10 | C.I. Direct Blue 86<br>diethylene glycol<br>triethylene glycol<br>monoethyl ether<br>sodium dehydroacetate<br>ultra-pure water | 2<br>13<br><br>4<br>0.1<br>80.9 | 0 ppm |

In the same manner as that of Example 1, recording inks 3-1 to 3-10 were filtered and de-aerated, hermetically sealed in an ink bag, and placed in an environment of 70 °C for fifteen days. Thereafter, in the same manner as that of Example 1, these recording inks were subjected to evaluation of delivery stability (A) in the printing operation with an ink jet printer and clogging (B) in the case where a printing head was filled with a recording ink and allowed to stand without providing a cap at room temperature for one month. The results are shown in Table 2.

TABLE 2

| Recording ink | (A) | (B) |
|---|---|---|
| 3-1 | good | good |
| 3-2 | good | good |
| 3-3 | good | good |
| 3-4 | good | good |
| 3-5 | good | good |
| 3-6 | frequent dot omission | good |
| 3-7 | frequent dot omission | good |
| 3-8 | frequent dot omission | good |
| 3-9 | good | curved flight |
| 3-10 | good | curved flight |

In Table 2, the term "frequent dot omission" is intended to mean a state wherein the omission of dots occurs at least five times when 120 cc of a recording ink was subjected to continuous printing, and the term "curved flight" is intended to mean a state wherein missed printing is observed or mis-alignment of printing occurs.

EXAMPLE 4

| Composition | |
|---|---|
| dye No. 4 of Table 1 | 1 part by weight |
| glycerin | 15 parts by weight |
| ultra-pure water | 84 parts by weight |

A recording ink having the above described compositions was heated with stirring to prepare 500 g of the recording ink. This recording ink was cooled and passed through anion exchange resin (Amberlite IRA-410; a product of Japan Organo Co. Ltd) and then ion-chromatographed to confirm that the nitrite ion concentration was 7 ppm. Thereafter, this recording ink was filtered through a 1 micron membrane filter and de-aerated, and an aluminium-laminated polyethylene bag having low gas permeability was filled with the treated recording ink. The polyethylene bag was subjected to submerged sealing to obtain an ink bag containing an ink hermetically sealed therein. The volume of one ink bag was 120 cc. Four ink bags were placed in an environment of 70 °C for fifteen days. Then, the nitrogen concentration was measured by gas chromatography and found to be 9 ppm on average. This ink was used for printing with an ink jet printer HG-2500 (a product of Seiko Epson Corporation). It was found that stable printing was possible without omission of dots for all of the four ink bags. The printing head of the ink jet printer was filled with this recording ink and was allowed to stand at room temperature for one month without a cap for preventing clogging, and the recording ink was delivered again. It was found that printing could be conducted in good conditions without clogging.

COMPARATIVE EXAMPLE 4

When a recording ink having a composition described in Example 4 was not passed through an anion exchange resin, the nitrite ion concentration was 32 ppm. In the same manner as that of Example 4, this recording ink was filtered and de-aerated, then hermetically sealed in aluminium-laminated bags, placed in an environment of 70 °C for fifteen days, and then subjected to measurement of nitrogen concentration. The average nitrogen concentration was 14 ppm. One ink bag was opened under water. As a result, it was found that bubbles were formed in the ink bag. Further, printing was conducted with the remaining ink bags in the same manner as that of Example 4. It was found that all three ink bags frequently brought about omission of dots so that no stable print quality was attained.

EXAMPLE 5

| Composition | |
|---|---|
| dye No. 17 of Table 1 | 2 parts by weight |
| polyethylene glycol No. 200 | 10 parts by weight |
| triethylene glycol | 5 parts by weight |
| ultra-pure water | 83 parts by weight |

A recording ink having the above composition was prepared in the same manner as that of Example 1 and passed through an ultrafiltration membrane (HF1-43-PM1; a product of Romicon), and ultrapure water was added to compensate for the loss due to concentration by ultrafiltration. Thereafter, it was confirmed that the nitrite ion concentration of the ink was 2 ppm. The recording ink was filtered and deaerated and then hermatically sealed in an ink bag, and evaluation was conducted in the same manner as that of Example 4. As a result, it was found that the amount of nitrogen generated was 5 ppm. Further, printing stability was excellent, and no clogging occurred even after one month.

COMPARATIVE EXAMPLE 5-1

After a recording ink described in Example 5 was prepared, 0.1 g of sulphamic acid was added thereto. The recording ink was further heated with stirring, cooled and subjected to measurement of the nitrite ion concentration. As a result, it was found that the concentration was 0.1 ppm. This recording ink was filtered and de-aerated and then hermetically sealed in an ink bag, and evaluation was conducted in the same manner as that of Example 4. As a result, it was found that the amount of nitrogen generated was 1.5 ppm. Further, printing could be stably conducted without omission of dots. However, in the evaluation of clogging after the recording ink was allowed to stand at room temperature for one month, no good printing could be attained because re-delivery of the recording ink was unstable and ink particles described as a curved flight although clogging was incomplete.

COMPARATIVE EXAMPLE 5-2

A recording ink was prepared in the same manner as that of Example 5, except that dye No 24 of Table 1, not having any azo linkage was used instead of the dye used instead of Example 5. The recording ink was heated with stirring and cooled. Then, the nitrite ion concentration was measured and found to be 2.5 ppm. This recording ink was filtered and deaerated and then hermatically sealed in an ink bag, and evaluation was conducted in the same manner as that of Example 4. As a result, it was found that the amount of nitrogen generated was 3.5 ppm. Further, printing could be stably conducted without omission of dots. However, in the evaluation of clogging after the recording ink was allowed to stand at room temperature for one month, the print quality was poor because re-delivery of the recording ink was unstable and ink particles described a curved flight although clogging was incomplete.

EXAMPLE 6

Recording inks 6-1 to 6-5 as the examples of the present invention were adjusted so as to have a nitrite ion concentration of 0.2 to 10 ppm by conducting the same treatment as that of Example 4 or 5. Comparative recording inks 6-6 to 6-8 were used as such without adjustment of the nitrite ion concentration. Recording inks 6-9 and 6-10 were subjected to neutralization of the nitrite ion with sulphamic acid. Comparative recording inks 6-11 and 6-12 were those wherein dyes Nos 25 and 26 of Table 1 respectively, each not having any azo linkage in its molecule were used as a component.

In Table 3, amounts of components are parts by weight, and concentration is that of the nitrite ion.

TABLE 3

| Recording ink | Components | Amount | Concentration |
|---|---|---|---|
| 6-1 | dye No 7 of Table 1 | 2 | 10 ppm |
| | glycerin | 15 | |
| | diethylene glycol | 5 | |
| | ultrapure water | 78 | |
| | dye No 10 of Table 1 | 3 | |
| | triethylene glycol | 28 | |

| | | | |
|---|---|---|---|
| 6-2 | EDTA-disodium (chelating agent) | 0.01 | 4 ppm |
| | ultrapure water | 71 | |
| 6-3 | dye No 14 of Table 1 | 2.5 | 6 ppm |
| | polyethylene glycol No. 400 | 12 | |
| | ethylene glycol monomethyl ether | 3 | |
| | Proxel XL-2 (fungicide; a product of ICI) | 0.2 | |
| | ultrapure water | 82.3 | |
| 6-4 | dye No 21 of Table 1 | 2 | 0.9 ppm |
| | triethanolamine | 15 | |
| | sodium dehydroacetate (fungicide) | 0.1 | |
| | ultrapure water | 82.9 | |
| 6-5 | dye No 23 of Table 1 | 1.5 | 0.3 ppm |
| | glycerin | 20 | |
| | N-methyl-2-pyrrolidone | 4 | |
| | potassium hydroxide | 1 | |
| | ultrapure water | 81.5 | |
| 6-6 | dye No 10 of Table 1 | 2 | 34 ppm |
| | glycerin | 15 | |
| | diethylene glycol | 5 | |
| | ultrapure water | 78 | |

| | | | |
|---|---|---|---|
| 6-7 | dye No 14 of Table 1<br>polyetheylene glycol No 400<br>Proxel XL-2<br>ultrapure water | 2.5<br>10<br>0.2<br>87.3 | 18 ppm |
| 6-8 | dye No 21 of Table 1<br>N-methyl-2-pyrrolidone<br>EDTA-disodium<br>ultrapure water | 1.5<br>30<br>0.2<br>68.3 | 11 ppm |
| 6-9 | dye No 4 of Table 1<br>monoethanolamine<br>triethanolamine<br>ultrapure water | 1<br>5<br>5<br>89 | 0.02 ppm |
| 6-10 | dye No 16 of Table 1<br>diethylene glycol<br>triethylene glycol monomethyl ether<br>sodium dehydroacetate<br>ultrapure water | 2<br>13<br>4<br>0.1<br>80.9 | 0 ppm |
| 6-11 | dye No 25 of Table 1<br>glycerin<br>N-methyl-2-pyrrolidone<br>ultrapure water | 1.5<br>15<br>3<br>80.5 | 1 ppm |
| 6-12 | dye No 26 of Table 1<br>diethylene glycol<br>sodium dehydroacetate<br>ultrapure water | 3<br>20<br>0.1<br>76.9 | 5 ppm |

In the same manner as that of Example 4, recording inks 6-1 to 6-12 were filtered and de-aerated, and each were hermatically sealed in an ink bag, and placed in an environment of 70 °C for 15 days. Thereafter, in the same manner as that of Example 1, these recording inks were subjected to evluation of delivery stability (A) in a printing operation with an ink-jet printer and clogging (B) in the case where a printing head was filled with a recording ink and allowed to stand without providing a cap at room temperature for one month. The results are shown in Table 4.

Table 4

| Recording ink | (A) | (B) |
|---|---|---|
| 6-1 | good | good |
| 6-2 | good | good |
| 6-3 | good | good |
| 6-4 | good | good |
| 6-5 | good | good |
| 6-6 | frequent dot omission | good |
| 6-7 | frequent dot omission | good |
| 6-8 | frequent dot omission | good |
| 6-9 | good | curved flight |
| 6-10 | good | curved flight |
| 6-11 | good | curved flight |
| 6-12 | good | curved flight |

In Table 4, the term "frequent dot omission" is intended to mean a state wherein the omission of dot occurs at least 5 times when 120 cc of an ink was subjected to continuous printing, and the term "curved flight" is intented to mean a state wherein missing of printing is observed or misalignment of printing occurs.

In the above Examples of recording inks according to the present invention there is no evolution of a nitrogen gas even when placed in a high-temperature environment, so that they exhibits excellent effects including high durability during transportation and storage at a high temperature, remarkable prolongation of the service life improvement in the printing stability of an ink-jet printer, and prevention of curved flight which lowers the printing quality and is also a sign of clogging.

## Claims

**1.** A recording ink for an ink jet printer characterised by having a nitrite ion ($NO_2^-$) concentration of 0.2 to 10 ppm.

**2.** A recording ink as claimed in claim 1 characterised by including a dye having at least one azo linkage in its molecule.

**3.** A recording ink as claimed in claim 2 characterised in that the dye is present in an amount between 0.5 to 10 parts by weight.

**4.** A recording ink as claimed in any preceding claim characterised by including a wetting agent present in an amount between 5 and 80 parts by weight.

**5.** A recording ink as claimed in any preceding claim characterised by having a pH between 12 and 14.

**6.** A method of preventing bubble generation in recording ink for an ink jet printer, comprising adjusting the nitrite ion ($NO_2^-$) concentration in the recording ink to 0.2 to 10 ppm, de-aerating the recording ink and sealing the recording ink in a bag or vessel having a low gas permeability.

**7.** A method as claimed in claim 6 wherein the recording ink contains a dye having an azo linkage and the recording ink is treated to remove nitrite ion ($NO_2^-$) and thereby achieve said nitrite ion concentration of 0.2 to 10 ppm.

**8.** A method as claimed in claim 7 wherein the recording ink is passed through an ultra-filtration membrane or anion exchange membrane to remove nitrite ion.

**9.** Use of a nitrite ion, ($NO_2^-$) concentration of 0.2 to 10 ppm in a recording ink for an ink jet printer for preventing frequent dot omission and for curved flight of the ink during ink jet printing, said recording ink comprising a dye having an azo linkage.

## Patentansprüche

1. Aufzeichnungstinte für einen Tintenstrahldrucker, **dadurch gekennzeichnet,** daß sie eine Nitritionen($NO_2^-$)-Konzentration von 0,2 bis 10 ppm hat.

2. Aufzeichnungstinte nach Anspruch 1, **dadurch gekennzeichnet,** daß sie einen Farbstoff mit mindestens einer Azo-Verknüpfung in seinem Molekül enthält.

3. Aufzeichnungstinte nach Anspruch 2, **dadurch gekennzeichnet,** daß der Farbstoff in einer Menge zwischen 0,5 bis 10 Gewichts% vorhanden ist.

4. Aufzeichnungstinte nach irgendeinem vorhergehenden Anspruch, **dadurch gekennzeichnet,** daß sie ein Netzmittel enthält, das in einer Menge zwischen 5 und 80 Gewichts% vorhanden ist.

5. Aufzeichnungstinte nach irgendeinem vorhergehenden Anspruch, **dadurch gekennzeichnet,** daß sie einen pH zwischen 12 und 14 hat.

6. Verfahren zur Verhinderung von Blasenerzeugung in Aufzeichnungstinte für einen Tintenstrahldrucker, aufweisend das Einstellen der Nitritionen($NO_2^-$)-Konzentration in der Aufzeichnungstinte auf 0,2 bis 10 ppm, Entlüften der Aufzeichnungstinte und Verschließen der Aufzeichnungstinte in einem Beutel oder Behälter mit geringer Gasdurchlässigkeit.

7. Verfahren nach Anspruch 6, bei dem die Aufzeichnungstinte einen Farbstoff mit einer Azo-Verknüpfung enthält und bei dem die Aufzeichnungstinte behandelt wird, um Nitritionen($NO_2^-$) zu entfernen und dadurch die Nitritionen-Konzentration von 0,2 bis 10 ppm zu erreichen.

8. Verfahren nach Anspruch 7, bei dem die Aufzeichnungstinte durch eine Ultrafiltrations-Membran oder eine Anionenaustauscher-Membran hindurchgeführt wird, um Nitritionen zu entfernen.

9. Verwendung einer Nitritionen($NO_2^-$)-Konzentration von 0,2 bis 10 ppm in einer Aufzeichnungstinte für einen Tintenstrahldrucker zur Verhinderung häufiger Punkt-Auslassung und für gekrümmten Flug der Tinte während des Tintenstrahldruckens, wobei die Aufzeichnungstinte einen Farbstoff mit einer Azo-Verknüpfung aufweist.

## Revendications

1. Une encre d'enregistrement pour une imprimante à jet d'encre caractérisée en ce qu'elle présente une concentration en ion nitrite ($NO_2^-$) de l'ordre de 0,2 à 10 ppm.

2. Une encre d'enregistrement telle que revendiquée dans la revendication 1, caractérisée en ce qu'elle inclut un pigment présentant au moins une liaison azo dans sa molécule.

3. Une encre d'enregistrement telle que revendiquée dans la revendication 2, caractérisée en ce que le pigment est présent en une quantité comprise entre 0,5 et 10 parties en poids.

4. Une encre d'enregistrement telle que revendiquée dans l'une quelconque des revendications précédentes, caractérisée en ce qu'elle inclut un agent de mouillage présent en une quantité comprise entre 5 et 80 parties en poids.

5. Une encre d'enregistrement telle que revendiquée dans l'une quelconque des revendications précédentes, caractérisée en ce qu'elle présente un pH compris entre 12 et 14.

6. Un procédé permettant de prévenir l'apparition de bulles dans une encre d'enregistrement pour une imprimante à jet d'encre, comprenant l'ajustement de la concentration en ion nitrite ($NO_2^-$) dans l'encre d'enregistrement au niveau de 0,2 à 10 ppm, la désaération de l'encre d'enregistrement et le scellement de l'encre d'enregistrement dans un sac ou conteneur présentant une faible perméabilité aux gaz.

7. Un procédé tel que revendiqué dans la revendication 6, dans lequel l'encre d'enregistrement contient un pigment présentant une liaison azo et l'encre d'enregistrement est traitée de façon à éliminer les ions nitrite ($NO_2^-$) et par la même obtenir ladite concentration en ions nitrite de l'ordre de 0,2 à 10 ppm.

8. Un procédé tel que revendiqué dans la revendication 7 dans lequel l'encre d'enregistrement est passée à travers une membrane d'ultra filtration ou une membrane échangeuse d'anions afin d'en éliminer les ions nitrite.

9. L'utilisation d'une concentration en ions nitrite ($NO_2^-$) de l'ordre de 0,2 à 10 ppm dans une encre d'enregistrement destinée à une imprimante à jet d'encre afin d'éviter les fréquentes omissions de points et pour la déviation du jet d'encre au cours de l'impression par jet d'encre, ladite encre d'enregistrement comprenant un pigment présentant une liaison azo.

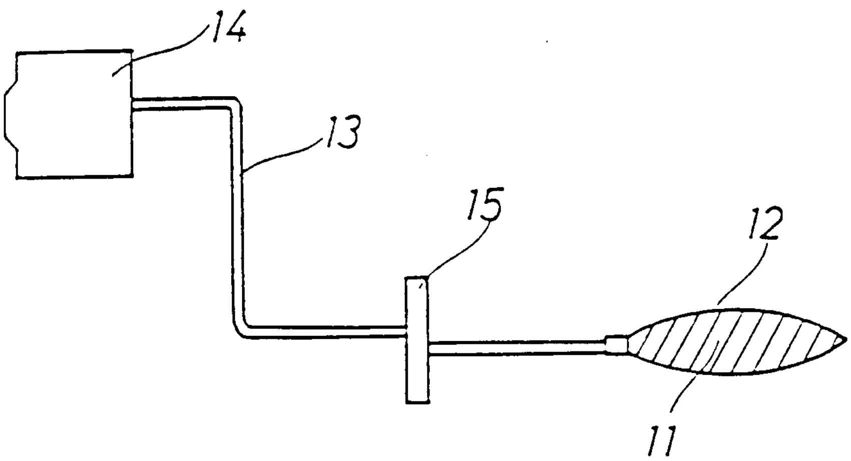
14
13
15
12
11

FIG 1

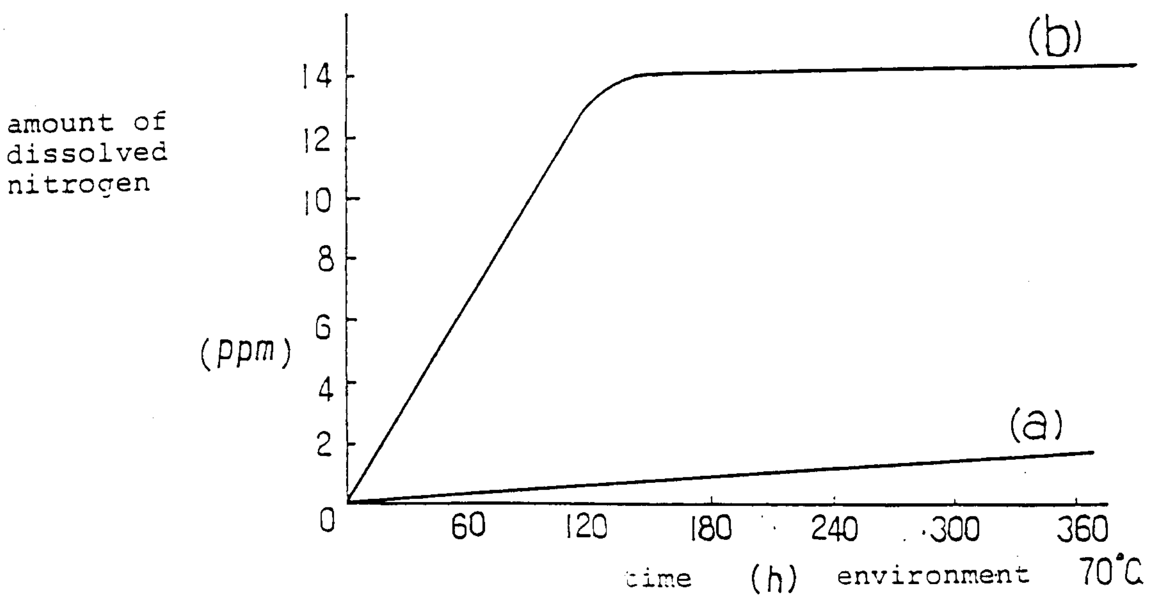
amount of dissolved nitrogen
(ppm)
14
12
10
8
6
4
2
0
60
120
180
240
300
360
(b)
(a)
time (h) environment 70°C

FIG 2